(19) Europäisches Patentamt
European Patent Office
Office européen des brevets

(11) Publication number: **0 042 768 A1**



# (12) EUROPEAN PATENT APPLICATION


(21) Application number: 81302846.1

(22) Date of filing: 24.06.81

(51) Int. Cl.³: B 29 F 1/00
B 29 F 3/00, C 08 J 3/12
//C08L23/06

(30) Priority: 25.06.80 US 162965

(43) Date of publication of application: 30.12.81 Bulletin 81/52

(84) Designated Contracting States: AT BE DE FR GB IT NL SE



(71) Applicant: AMERICAN HOECHST CORPORATION
Route 202-206 North
Somerville, N.J. 08876(US)

(72) Inventor: Lurie, Randolph Douglas
9 Linda Street
Leominster Massachusetts 01453(US)

(74) Representative: Wardrope, Alexander James Brownlie et al,
Frank B. Dehn & Co. European Patent Attorneys Imperial House 15-19 Kingsway
London, WC2B 6UZ(GB)


## (54) Injection molding and extrusion of ultra-high molecular weight polyethylene.


(57) Ultra-high molecular weight polyethylene (MW>1 x $10^6$) powder is compacted into pellets by use of, for instance, a pellet machine. Pellets thus obtained are fed to a screw injection molding machine. The injection molding is carried out under a mold temperature of 50 - 105°C and a barrel temperature of 232-343°C (450 – 650°F). The properties of the molded products are essentially equivalent to those of compression molded products. The pellets also facilitate screw extrusion where the barrel temperature and the die temperature are maintained within the range of 260-371°C (500 – 700°F).



EP 0 042 768 A1

# Injection molding and extrusion of ultra-high molecular weight polyethylene

This invention relates to a method of injection molding ultra-high molecular weight polyethylene, and to a method of screw-extruding ultra-high molecular weight polyethylene. The invention further relates to a novel composition of matter, namely pellets of ultra-high molecular weight polyethylene which are substantially free of fine powders.

Ultra-high molecular weight polyethylene (hereinafter referred to as "UHMW-PE") possesses various outstanding properties such as very high energy absorption characteristics (impact strength), abrasion resistance and chemical resistance.

Commercially available ultra-high molecular weight polyethylenes are generally fine powders, and the predominant portion of which are particles of less than 1 mm in size.

The very high melt viscosity and poor fluidity of UHMW-PE, however, have hampered its potential applications. It is well-known that it is very difficult to shape UHMW-PE by extrusion or injection molding method.

When injection molding of UHMW-PE powder is attempted by use of the conventional injection molding technique, one often encounters difficulty with feeding the powder through the screw plasticator, and the resultant product has an easily peelable, mica-like structure. Therefore, such polyethylenes are molded by compression molding techniques.

The injection molding method has various well-known advantages over the compression molding method.

For instance, injection molding generally has a better work efficiency than compression molding, and also affords molded articles having a complex shape which cannot be obtained by compression molding. In view of the difficulty of the injection molding of UHMW-PE, people desirous of obtaining a molded article of UHMW-PE having a complex shape often had to resort to a means where a starting piece obtained by compression molding is machined down to the final article of the desired shape. This method, however, has obvious disadvantages of low work efficiency and a large material loss.

US Patent 4 164 531 teaches a method of injection molding UHMW-PE wherein a UHMW-PE having an intrinsic viscosity of 3-30 at 135°C in decalin (which corresponds to the molecular weight range of $5.1 \times 10^5$ - $8.5 \times 10^6$ according to our formula explained below) is flashed into a mold cavity having a volume of 1.5 to 3.0 times that of the injected polyethylene and the temperature of which cavity is maintained above the melting point of the material, and then the mold cavity is reduced to a volume of less than 1.5 times that of the injected polyethylene to compress and unite the powder particles to form a coherent molded product.

It is noticed that the method of above-said patent is not a usual type of injection molding, but rather a hybrid of injection molding and compression molding. Thus, it has the disadvantages that the apparatus tends to be more expensive than the conventional injection molding machine where the mold cavity does not have the extra hydraulic pressure system attached thereto to change the mold volume, and that certain limitations attach as to the shapes of the articles moldable by said method.

US Patent 3 660 552 teaches a method of forming a molded article of a cross-linked thermoplastic polymer wherein a cross-linking agent is mixed with a thermoplastic polymer, the solid mixture is conveyed at a temperature of about 20 - 110°C and injected into a mold cavity through at least one nozzle under a pressure of about 1800 - 3000 kg/cm$^2$, and the material is cross-linked and molded at a temperature of about 180 - 300°C which is above the melting point of the original thermoplastic material. Again, it will be noted that said method is not a usual injection molding in that the mold temperature is kept above the melting point of the original thermoplastic material.

US Patent 3 036 340 teaches a method of molding high molecular weight polyethylene wherein a pre-form is prepared from a mixture of the polyethylene powder and a small amount of a stabilizer by use of a press, the resultant preform is placed in an injection pot maintained at 252°C (485°F), and by applying a pressure of at least 5.52 x $10^7$N.m$^{-2}$ (8000 psi) upon the preform by use of a ram, it is injected or transferred to a mold cavity maintained at a temperature of 127-177°C (260-350°F) and kept there for about 16 minutes while the pressure and the temperature are maintained at said values, and thereafter the mold cavity is gradually cooled below the flow temperature of said pre-form. This method is called transfer molding. A relatively high cavity temperature is used, namely, at least above the softening point of the material; a high pressure is applied to the system; a heating-cooling cycle of the mold cavity temperature is necessary for each molding cycle, and the combination of these factors cut down the work efficiency of the method.

US Patent 3 665 069 teaches the extrusion of UHMW-PE where a heterogeneous composite of 75-99 parts by weight of UHMW-PE and 1-25 parts by weight of a carrier is supplied to an extruder comprising a transport screw. The carrier is a petroleum wax, liquid hydrocarbon (MW >200) or synthetic waxes or a combination thereof. This method requires an addition of a substantial amount of carrier to UHMW-PE in order to carry out the screw extrusion.

US Patent 3 219 728 discloses a composition comprising 10 - 50 parts by weight of a normally solid, fusible alkane hydrocarbon per 100 parts by weight of UHMW-PE. The composition is intended primarily for extrusion. It has a high percentage of carrier.

Against the background, the present inventor has discovered that ultra-high molecular weight polyethylene can be injection molded to obtain products of satisfactory qualities that are essentially equivalent to those obtained by compression molding, by use of conventional screw injection molding machines if the polyethylene powder is first compacted into pellets, for instance, by use of a pellet machine, and if the molding conditions are judiciously chosen.

Moreover, it has been discovered that the removal of residual fine powders from the pellets affords a composition particularly suitable for obtaining good quality products by the injection molding method of this invention.

Furthermore, the present inventor has discovered that the pellets of UHMW-PE can be screw-extruded relatively easily.

Thus in one aspect, the invention provides a method of injection molding ultra-high molecular weight polyethylene having a molecular weight of at least $1 \times 10^6$ as determined from its intrinsic viscosity in decalin solution at 135°C by the formula, $MW = 5.37 \times 10^4 \text{(intrinsic viscosity)}^{1.49}$, which method comprises feeding pellets of said polyethylene, which have been prepared by compacting the said polyethylene in powder form to form said pellets having a density of at least 0.9 g/ml, to a screw injection molding machine in which the barrel temperature is maintained at 232-343°C and the mold temperature at 50 - 150°C.

The method of injection molding UHMW-PE according to the invention uses a conventional screw injection molding machine and has a high work efficiency, yet affords satisfactory products having qualities essentially equivalent to those obtained by the compression molding method.

In another aspect, the invention provides a method of screw-extruding ultra-high molecular weight polyethylene having a molecular weight of at least $1 \times 10^6$ as determined from its intrinsic viscosity in decalin solution at 135°C by the formula, $MW = 5.37 \times 10^4 \text{(intrinsic viscosity)}^{1.49}$, which method comprises feeding pellets of said polyethylene, which have been prepared by compacting said polyethylene in powder form to form said pellets having a density of at least 0.9 g/ml, to a screw-extruder in which the barrel temperature is maintained at 260-372°C.

In a still further aspect, the invention provides substantially powder-free pellets having a density of at least 0.9 g/ml when measured as individual pieces, which are prepared by compacting, with the application of physical force, a composition consisting substantially of powders of ultra-high molecular weight polyethylene having a molecular weight of at least

$1 \times 10^6$ as determined from its intrinsic viscosity in decalin solution at 135°C by the formula, MW = $5.37 \times 10^4$ (intrinsic viscosity)$^{1.49}$, into a coherent aggregage state and then substantially separating out powders remaining in the compacted pieces.

The pellets of UHMW-PE substantially free of fine powders according to the invention are particularly useful for the injection molding and the screw extrusion methods of this invention.

The injection molding method of this invention comprises feeding UHMW-PE pellets prepared, for instance, by use of a pellet mill, to a conventional screw injection molding machine, wherein the barrel temperature is maintained at 232-343°C (450-650°F) and more preferably at 260-316°C (500 - 600°F), and the mold temperature is maintained at 50 - 105°C and more preferably at 55 - 100°C.

The term Ultra-High Molecular Weight Polyethylene as used herein means polyethylene having a molecular weight of at least about $1 \times 10^6$ determined from the intrinsic viscosity of a sample in decalin at 135°C according to the formula:

$$MW = 5.37 \times 10^4 \text{ [intrinsic viscosity]}^{1.49}$$

According to the method of this invention, UHMW-PE may now be injection molded into articles of various shapes and sizes by use of a conventional screw injection molding machine. The operation proceeds smoothly without encountering such difficulties and problems as the clogging-up of the transfer system and insufficient coherency or lamination of the molded article which usually occur when one attempts to injection mold powders of UHMW-PE.

According to the method of this invention, the molding cycle is short and the work efficiency high. The method does not require any heating-cooling cycle of the mold cavity; it is kept at a relatively low constant temperature that is considerably lower than the melting point of UHMW-PE.

According to this invention, many conventional screw injection molding machines can be used. The apparatus does not require any particularly high hydraulic pressure systems.

According to the injection molding method of this invention, molded articles of UHMW-PE having various complex shapes not moldable by compression molding method can be obtained. The physical properties of the molded products are essentially equivalent to those of the compression molded products

The invention is illustrated by way of example with reference to the accompanying drawings, in which

Figure 1 shows a perspective view of a rack molded in accordance with the injection molding method according to the invention;

Figure 2 shows a top plan view of the rack shown in Figure 1;

Figure 3 shows an electron scanning microscope picture at x 5000 magnification of a commercially available UHMW-PE powder; and

Figure 4 shows an electron scanning microscope picture at x 5000 magnification of the typical morphology of particles of UHMW-PE after they have been compacted into pellets.

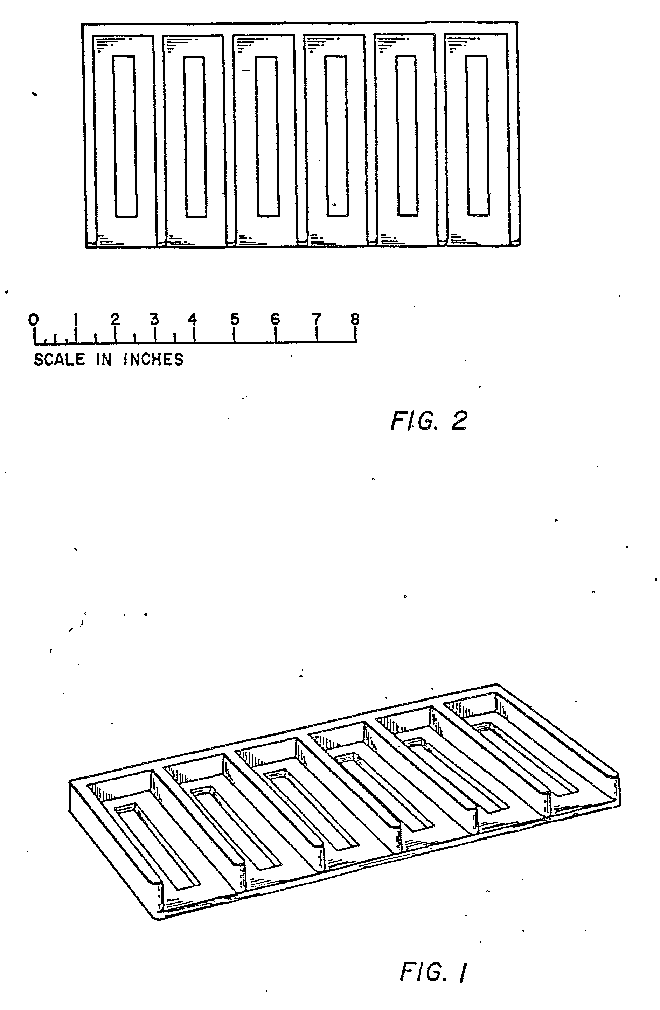

The rack shown in Figure 1 and Figure 2 exemplifies a type of article that one can injection mold according to the method of this invention.

Another aspect of this invention is a novel method of screw extruding UHMW-PE wherein pellets of UHMW-PE described above, instead of powders of UHMW-PE, are fed to a conventional screw extruder, and the barrel temperature and the die temperature are maintained within the temperature range of 260-372°C (500 - 700°F). According to this method a various extrusion-molded article of UHMW-PE having a satisfactory quality can be obtained.

The injection molding method and the screw extrusion method of this invention are particularly useful where the molecular weight of polyethylene to be molded is above 1 x $10^6$.

The invention thus generally described may be more clearly understood from the following detailed description of the invention.

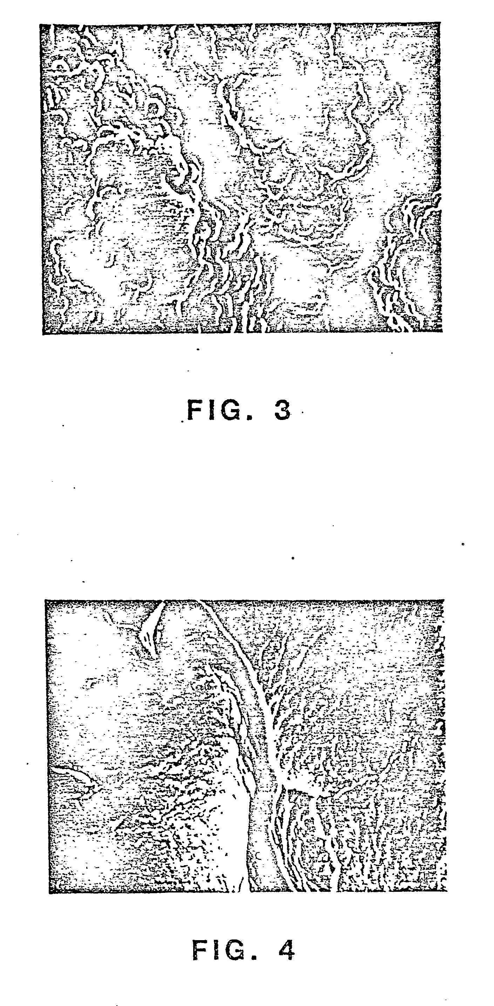

Pellets of UHMW-PE can be conveniently prepared from the powder in various ways including the use of a pellet mill and of a tablet press. The "pellet" as used herein is not limited to any specific shape or size. It is not limited as to the method of preparation. It shall cover any compacted aggregate of UHMW-PE powder. The pellet, however, must have a density of at least 0.9 g/ml when measured as an individual piece, which is substantially higher than the bulk density of the original powder, and a reasonable degree of coherency such that the pellet does not break up easily under a mild external force, for instance, handling of the pellets with fingers. It has been found that use of a commercial pellet mill is the most convenient way of preparing UHMW-PE pellets suitable for the methods of this invention. Pellet mills produce pellets in a continuous manner in contrast to the intermittent operation of such devices as tablet presses. In a typical pellet mill, UHWM-PW powder is continuously forced through holes provided in a circular die. Said force is supplied by a rotation of a roller which is placed close to the inner perimeter of the circular die. Thus, strands of compacted UHMW-PE continuously come out of the die and they are broken to short lengths by a blade or blades placed near the outer perimeter of the die. Usually the strands have a circular cross section. Typical sizes of the cross section are 3.2 mm (1/8 inch) and 6.4 mm (1/4 inch) in diameter. The distribution of the lengths of the pellets depends on the operating condition of the pellet mill. Typically, the predominant portion of the pellets has the length in the range of 4.8 mm (3/16 inch). The density of the individual pellet is usually above 0.9, and typically about 0.93. The bulk density values of the commercial UHMW-PE powders are usually below 0.5. The overall size of the pellet is not critical for the purpose of this invention, but the pellet must have a reasonable degree of coherency. For this purpose, the density of the pellet must be at least 0.90. When a typical commercial pellet mill is operated a considerable amount of heat is generated within the system due to friction, etc. Thus, it is believed that it is the combination of mechanical force and heat that accomplishes the compacting of the powder into hard pellets. Figure 3 is a typical appearance, as observed under a scanning electron microscope at x 5000 magnification, of a commercial UHMW-PE powder. The picture covers a portion of a single particle and shows fine structures comprising nodules of less than about 1 µm size, crevices and fibrous structures. Figure 4 shows a scanning electron microscope picture at x 5000 magnification of an interior structure of a typical pellet prepared by a commercial pellet mill. The surface under observation was created by breaking the pellet in half by hand. It is noticed that the fine structures of the original powder mentioned above have substantially disappeared.

The pellets thus prepared may break up to some extent during transportation and handling giving off some "coarse particles". Such "coarse particles" are much larger than the "fine powders" which constitute the usual commercial ultra-high molecular weight polyethylene. Such "coarse particles" usually pass 12 mesh screen (1.68 mm) and are retained on 60 mesh screen (0.25 mm), whereas the size of the commercial UHMW-PE powder is such that usually more than 98 weight per cent of the powder passes 60 mesh screen (0.25 mm). A minor amount of said "coarse particles" does not interfere with the injection molding of this invention.

A small amount (about 1% by weight or less) of fine powders usually exist in the pelletized product coming out of the pellet mill. Most of these fine powders are believed to be the powders that came through the die of the pellet mill without ever being pelletized. It has been found that these fine powders are detrimental to the practice of this invention and that it is desirable to remove such fine powders before feeding the pellets to the injection molding machine. The removal of such fine powders can be accomplished, for instance, by use of a powder sieve.

In contrast to the methods used in the patents mentioned earlier, the method of this invention uses a relatively low mold temperature in accordance with the usual practice of injection molding. Since there is no heating-cooling cycle involved in the method of this invention, the molding cycle is short. The mold temperature is kept substantially constant during the molding cycle. The mold temperature range of 50 - 105°C may be used for the method of this invention, but the preferred temperature range is 55 - 100°C, and most preferably about 70-85°C. Below about 55°C, physical properties of the molded product such as tensile strength and Izod value tend to deteriorate. Above about 100°C, the molded article tends to stick to the die surface, and the problem of warpage becomes more significant (warpage of the molded article occurs due to the application of physical force thereto by the ejector pin as well as due to the gradual shrinkage of the material after cooling).

With regard to the barrel temperature, the temperature range of 232-343°C (450-650°F) may be used for the injection molding method of this invention. The preferred temperature range is 260-316°C (500 - 600°F). Below 232°C (450°F), difficulty tends to arise in the conveyance of the material. Above 343°C (650°F), the tendency of the chemical decomposition of UHMW-PE becomes more pronounced. Thermal degradation of the material tends to discolor the products and reduce the physical properties. Where a coloring agent such as a pigment is added to the starting material, slight discoloration due to high temperature will go unnoticed, but where no coloring agent is added to the material, it is of course preferable to minimize discoloration.

With regard to the screw design suitable for injection molding UHMW-PE according to the method of this invention, it has been found that the preferable range of the "compression ratio", namely, the ratio of the maximum root diameter of the screw to the minimum root diameter, is 2.0 - 2.5. Addition of a small amount (less than about 0.5 weight per cent) of stabilizer and/or lubricant to the starting material does not significantly alter the operation conditions of the method of this invention. Thus, for instance, when 0.1% of Topanol CA (a hindered phenol type antioxidant) and 0.3% of dilauroyl dithio dipropionate were added to UHMW-PE powder and the mixture pelletized, it was observed that the addition did not significantly affect the injection molding process. It is to be noted that the present invention does not require the addition of a carrier to UHMW-PE as do US Patents 3 665 068 and 3 219 728 referred to earlier. Injection molding as well as screw extrusion of UHMW-PE can be accomplished, according to the methods of this invention, without adding any carrier to the starting materials.

As mentioned earlier, the injection molding method of this invention is characterised by a short molding cycle. Although it depends on various factors, the typical cycle time is 1 - 2 minutes.

The method of this invention does not employ any excessive injection pressure. Typically the injection pump pressure is about $6.9 \times 10^6$ $N.m^{-2}$ (1000 psig) during the stage called "packing the mold".

The screw extrusion method of this invention employs the same pellets of UHMW-PE as described above. The barrel temperature of the screw extruder is to be maintained within the range of 260-372°C (500 - 700°F). The die temperature is to be maintained also within the range of 260 - 372°C (500 - 700°F). While it is extremely difficult to screw-extrude UHMW-PE when the feed material is in the original powder form, it has been discovered that the present invention which employs a pelletized form of UHMW-PE accomplishes the purpose relatively easily. Thus, the screw-extrusion method of this invention is a method of processing UHMW-PE wherein pellets of UHMW-PE are fed to a screw-extruder, the barrel temperature of which is maintained within the range of 260 - 372°C (500 - 700°F) and the die temperature of which is maintained also within the range of 260 - 372°C (500 - 700°F). It is helpful, as in the case of the injection molding, to substantially remove the fine powders existing in the pelletized UHMW-PE in order to facilitate the screw-extrusion method of this invention and also to obtain products having better qualities. The screw-extrusion method of this invention does not require the addition of a carrier to the starting material. Once again, the "pellet" to be used for the method of this invention for screw-extruding UHMW-PE is not limited as to the size, shape or the method of preparation, but it must have a density of at least 0.9 g/ml.

The following examples are given for the purpose of illustration of this invention.

Example 1

A commercial ultra-high molecular weight polyethylene powder (molecular weight was $4 \times 10^6$, and more than 99% of the powder passed 60 mesh screen (0.25 mm)) was fed to a commercial pellet mill. The cross-sectional size of the pellets was 3.2 mm (1/8 inch) in diameter. The density of the individual pellets was about 0.93 g/ml. The resultant pellets were sieved by use of a 12 mesh (1.68 mm) sieve in order to remove fine powder particles. These pellets were fed to a commercial 765 g (27 ounce) size injection molding machine having a single screw. Flat plaques of 159 x 216 x 2.5 mm (6 1/4" x 8 1/2" x 1/10") size and racks shown in Figure 1 and Figure 2 were molded while varying the mold temperature and the barrel temperature. The rack, as can be seen from Figure 1 and Figure 2, is not a flat sheet, but has a complex shape. It has a 273 mm (10 3/4") length and 133 mm (5 1/4") width, and the thickness is about 15.9 mm (5/8") at the thickest portion. The two kinds of molded articles were subjected to various physical property tests, i.e., density, abrasion resistance, tensile strength at yield and fail, tensile elongation at fail and impact strength value. Abrasion resistance was measured by the standard Sand Slurry Test and the result is expressed in terms of % weight loss. Tensile strength and tensile elongation tests were conducted according to ASTM D-638 Impact strength values were determined substantially in accordance with ASTM D-256, namely, the notch was changed from the conventional single Izod notch to a razor cut notch on opposite sides of the test specimen. The results are summarised in Table 1.

For the sake of comparison, plaques of 305 x 305 x 6.4 mm (12" x 12" x 1/4") size were compression molded from the same UHMW-PE powder as used above by applying 219 kN (22 tons force) on a 254 mm (10 inch) diameter ram. The heating period was thirty minutes and the cooling period was also thirty minutes. The maximum temperature was about 205°C. The same physical tests were conducted on the plaques thus obtained. The results are included in Table 1.

EXAMPLE 2

The same pellets of ultra-high molecular weight polyethylene as used in Example 1 (which has gone through the sieving process in order to substantially remove the residual fine powders) were fed to a commercial 25.4 mm (1") screw extruder. The screw had the compression ratio of 2.5. The extruder was operated without a die; the barrel extension served as an extrusion die, and the land length was about 38 mm ( 1 1/2"). The operating condition was as follows: front zone 357°C (675°F), center 343°C (650°F), rear 343°C (650°F), and melt temperature 371°C (700°F). The extruded product had a satisfactory quality. The original powder form UHMW-PE could not be extruded with this set-up.

0042768

TABLE 1

| METHOD | INJ. | INJ. | INJ. | INJ. | INJ. | INJ. | COMPRESSION |
|---|---|---|---|---|---|---|---|
| Molded Piece | Rack[a] | Rack[a] | Rack[a] | Plaque[b] | Plaque[b] | Plaque[b] | Plaque[c] |
| Mold Temp., °C | 68 | 68 | 67 | 74 | 88 | 103 | |
| Barrel Temp., °C | 316 | 329 | 343 | 316 | 316 | 316 | |
| Density (g/ml) | 0.943 | 0.948 | 0.949 | 0.941 | 0.940 | 0.945 | |
| Abrasion Resistance | | | | 0.7 | 0.8 | 0.9 | |
| Hardness (Shore D) | 57 | 62 | 61 | | | | 65 |
| Tensile Strength at yield | 24.8 | 23.4 | 25.5 | 29.0 | 29.0 | 27.6 | 23.4 |
| at fail $10^6 N.m^{-2}$ | 33.1 | 30.3 | 14.5 | 36.5 | 37.2 | 31.7 | 37.2 |
| Tensile Elongation at fail $10^6 N.m^{-2}$ | 11.7 | 15.2 | 8.3 | 13.8 | 13.8 | 11.7 | 2.96 |
| Impact Strength $10^3 N$ | | | | | | | 1.87 |
| Tensile Impact $10^3 N.m^{-1}$ | 149 | 141 | 65.1 | 336 | 304 | 263 | 715 |

a. See Fig. 1 and 2

b. 159 x 216 x 2.5 mm

c. 305 x 305 x 6.4 mm

CLAIMS:

1. A method of injection molding ultra-high molecular weight polyethylene having a molecular weight of at least $1 \times 10^6$ as determined from its intrinsic viscosity in decalin solution at 135°C by the formula, $MW = 5.37 \times 10^4$ (intrinsic viscosity)$^{1.49}$, which method comprises feeding pellets of said polyethylene, which have been prepared by compacting the said polyethylene in powder form to form said pellets having a density of at least 0.9 g/ml, to a screw injection molding machine in which the barrel temperature is maintained at 232-343°C and the mold temperature at 50 - 150°C.

2. The method of claim 1, wherein said pellets are prepared by a pellet mill.

3. The method of claim 2, wherein fine powders have substantially been separated out from the pellets prepared by the pellet mill before being fed to the screw injection molding machine.

4. A method according to any one of the preceding claims wherein the barrel temperature is maintained at 260-316°C and the mold temperature at 55 - 100°C.

5. A method of screw-extruding ultra-high molecular weight polyethylene having a molecular weight of at least $1 \times 10^6$ as determined from its intrinsic viscosity in decalin solution at 135°C by the formula $MW = 5.37 \times 10^4$ (intrinsic viscosity)$^{1.49}$, which method comprises feeding pellets of said polyethylene, which have been prepared by compacting said polyethylene in powder from to form said pellets having a density of at least 0.9 g/ml, to a screw-extruder in which the barrel temperature is maintained at 260-371°C.

6. A method of claim 5, wherein said pellets are prepared by a pellet mill.

7. A method of claim 6, wherein fine powders have substantially been separated out from the pellets prepared by the pellet mill before being fed to the screw-extruder.

8. Substantially powder-free pellets having a density of at least 0.9 g/ml when measured as individual pieces, which are prepared by compacting, with the application of physical force, a composition consisting substantially of powders of ultra-high molecular weight polyethylene having a molecular weight of at least $1 \times 10^6$ as determined from its intrinsic viscosity in decalin solution at 135°C by the formula, $MW = 5.37 \times 10^4$ (intrinsic viscosity)$^{1.49}$, into a coherent aggregate state and then substantially separating out powders remaining in the compacted pieces.

9. Injection molded articles prepared by the method of any one of claims 1 to 4.

0 1 2 3 4 5 6 7 8
SCALE IN INCHES

FIG. 2

FIG. 1

FIG. 3

FIG. 4

European Patent Office

0042768

Application number

EP 81 30 2846

# EUROPEAN SEARCH REPORT

| DOCUMENTS CONSIDERED TO BE RELEVANT | | | CLASSIFICATION OF THE APPLICATION (Int Cl.³) |
|---|---|---|---|
| Category | Citation of document with indication, where appropriate, of relevant passages | Relevant to claim | |
| A | GB - A - 1 038 809 (RUHRCHEMIE) * The whole document * -- | 1 | B 29 F 1/00 3/00 C 08 J 3/12// C 08 L 23/06 |
| A | DE - A - 1 454 865 (RUHRCHEMIE) * The whole document * -- | 1,5 | |
| A | DE - A - 2 034 023 (BADISCHE ANILIN- & SODAFABRIK) * The whole document * -- | 1 | TECHNICAL FIELDS SEARCHED (Int. Cl.³) |
| A | DE - B - 1 220 116 (ANKERWERK) * The whole document * -- | 1,5 | B 29 F C 08 J |
| A | US - A - 4 145 175 (J. GROFF) * The whole document * -- | 5 | |
| A | US - A - 4 171 338 (C.D. MASON) * The whole document * ---- | 5 | |

CATEGORY OF CITED DOCUMENTS

X: particularly relevant
A: technological background
O: non-written disclosure
P: intermediate document
T: theory or principle underlying the invention
E: conflicting application
D: document cited in the application
L: citation for other reasons

&: member of the same patent family, corresponding document

X The present search report has been drawn up for all claims

| Place of search | Date of completion of the search | Examiner |
|---|---|---|
| The Hague | 29-09-1981 | BOLLEN |

EPO Form 1503.1 06.78